# EUROPEAN PATENT SPECIFICATION

(11) **EP 0 531 272 B1**
(45) Date of publication and mention of the grant of the patent: **22.09.1999**
(21) Application number: 92870129.1
(22) Date of filing: 25.08.1992
(51) Int. Cl.: C08K 5/18, C08L 21/00

(54) **Rubber compositions having reduced staining and discoloration**
Kautschukzusammensetzungen mit reduzierter Abfärbung und Verfärbung
Compositions caoutchoutiques avec teintement et décoloration reduits

(30) Priority: 26.08.1991 EP 91870131
(43) Date of publication of application: 10.03.1993
(73) Proprietor: Solutia Europe N.V./S.A., 1150 Brussels (BE)
(72) Inventor: Vandevelde, Oscar Ghislain Joseph, B-6649 Vaux-sur-Sûre (BE); Moniotte, Philippe Gérard, B-4217 Heron (BE)
(74) Representative: Schalkwijk, Pieter Cornelis

(56) References cited:
- DE-A- 1 941 691
- FR-A- 2 323 730

## Description

This invention relates to rubber compositions having desirable properties inclusive of reduced staining and discoloration. These benefits are achieved through the use of additive levels of a selected class of N-disubstituted alkoxyanilines. The rubber compositions, in addition to the reduced staining and discoloration benefits, show improved flex properties and thus longer fatigue life. The claimed compositions herein are contain less than 4% of phenylenediamine anti-ozonants.

The prior art relative to rubber compositions is crowded and diverse and has accumulated over a long period of time. Much effort has been spent towards improving physical properties including the prevention of staining and discoloration, flexlife, fatigue, resistance to oxidation and crack development by ozone.

US patent 3. 466. 248 discloses anti-ozonant compositions for use in rubber containing specific phenylene diamine derivatives in combination with a further substituted compound inclusive of N-dialkyl alkoxyaniline. The diamine component represents from 50% to 90% and the alkoxyaniline from 50% to 10% of a mixture of these components.

GB-patent 852.932 relates to rubber chemicals which are capable of promoting effective antidegradant and anti-oxidant properties in rubber. Suitable rubber chemicals can be represented by N-mono-substituted alkoxyanilines. The rubber chemicals provide anti-ozonant properties and they do not seriously discolor light-colored rubber stocks.

It is a major object of this invention to make available rubber stocks having substantially non-staining properties or at least a substantially reduced tendency to develop stain.

It is another major object of this invention to formulate rubber compositions which are not discoloring or which have a substantially reduced tendency to be subject, even under adverse conditions, to discoloration.

It is still a further object of this invention to provide rubber compositions having good antifatigue properties with no significant stain and discoloration properties.

A further aim of the invention is to provide rubber compositions having good anti-oxidant and valuable anti-ozonant properties while maintaining the non-staining and non-discoloring properties of the rubber compositions.

The foregoing and other desirable benefits can now be secured from rubber compositions containing additive levels of a narrowly defined class of alkoxy anilines. The rubber compositions of the invention contain less than 4% of phenylene diamine anti-degradants.

This invention is, in part, based on the discovery that rubber compositions can be formulated having a cumulative series of desirable properties, inclusive of non-staining, non-discoloring, antifatigue, anti-ozonant and anti-oxidant properties. Such rubber compositions basically comprise an additive level, generally from 0.1 to 10 phr, of a para substituted alkoxyaniline having the formula 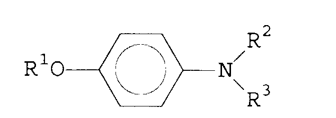 wherein R¹O is an alkoxy substituent in the benzene nucleus, R¹, R² or R³ is independently selected from straight or branched alkyl groups having from 1 to 20 carbon atoms, the chain of carbon atoms being possibly interrupted by ether or sulphide linkages, cycloalkyl and cycloalkenyl having from 4 to 8 carbon atoms, said cyclic structure optionally containing an oxygen atom in between two carbon atoms, alkenyls and alkynyls having from 2 to 20 carbon atoms in the chain structure, aralkyls containing 7 or more carbon atoms, or combinations thereof. It was also found that the inventive benefits, particularly non-staining and non-discoloring are readily available provided the rubber compositions are substantially free of N,N'-substituted-p-phenylene diamines. Subadditive levels of such phenylene diamines are not necessarily incompatible with the procurement of the inventive benefits. The substituents R¹, R² and R³, which can be identical or different, can be selected from a variety of chemical moieties. Such substituents can be selected from straight or branched alkyl groups having from 1 to 20, preferably 1 to 8 carbon atoms, whereby the carbon chain can be optionally interrupted by ether or sulfide linkages. The R substituents can also be selected from cycloalkyl and cycloalkenyl groups having from 4 to 8 carbon atoms and which cyclic groups can optionally contain an oxygen atom inbetween carbon atoms. The R substituents can also be selected from alkenyls and alkynyls having from 2 to 20, preferably 2 to 12 carbon atoms in the chain structure, and from aralkyls containing 7 or more carbon atoms. Combinations of the foregoing substituents can be made and frequently represent preferred substituents.

R¹ is most preferably represented by C₁ to C₆ alkyl groups such as methyl, ethyl, butyl and hexyl. Preferred R² and R³ moieties can be selected from cyclohexyl and, straight or branched alkyl, groups having from 1 to 8 carbon atoms.

Preferred alkoxyaniline species herein include :
N-methyl-N-cyclohexyl-4-hexyloxy-aniline.
N-methyl-N-1,3-dimethylbutyl-4-ethoxy-aniline
N-methyl-N-1,3-dimethylbutyl-4-hexyloxy-aniline
N-methyl-N-cyclohexyl-4-hexyloxy-aniline
N-methyl-N-cyclohexyl-4-butoxy-aniline
N-methyl-N-di(1,3-dimethylbutyl)-4-ethoxy-aniline

More preferred species were found to be as follows :
N-butyl-N-cyclohexyl-4-ethoxy-aniline
N-ethyl-N-cyclohexyl-4-ethoxy-aniline
N-butyl-N-1,3-dimethylbutyl-4-ethoxy-aniline
N-butyl-N-1,3-dimethylbutyl-4-butoxy-aniline
N,N-di(isopropyl)-4-methoxy-aniline
N,N-di(isopropyl)-4-ethoxy-aniline
N,N-di(1,3-dimethylbutyl)-4-methoxy-aniline
N,N-di(1,3-dimethylbutyl)-4-ethoxy-aniline
N,N-di(isobutyl)-4-methoxy-aniline
N,N-di(isobutyl)-4-ethoxy-aniline
N,N-di(ethyl)-4-methoxy-aniline
N-ethyl-N-isopropyl-4-ethoxy-aniline

Specifically preferred species herein include :
N-butyl-N-cyclohexyl-4-methoxy-aniline
N-allyl-N-cyclohexyl-4-methoxy-aniline
N-but-2-enyl-N-cyclohexyl-4-ethoxy-aniline

The aromatic nucleus of the alkoxyanilines can be substituted optionally by additional group(s) which do not interfere with the obtaining of the beneficial properties of the inventive compositions herein.

The essential para substituted alkoxyaniline component can be represented by the freebase or by salts formed by the addition of acids to the alkoxyanilines. For example, carboxylic acids such as stearic or acetic acids or inorganic acids such as hydrochloric acid can be used to that effect.

The para alkoxyaniline generally represents from 0.1 to 10, preferably from 0.5 to 6, more preferably from 1 to 4 phr. where phr means "part per hundred parts of rubber".

The rubber compositions herein are preferably substantially free of N,N'-substituted-p-phenylenediamines as e.g. known from US patent 3.466.248. For any practical purposes said substituted phenylenediamines can be tolerated at a level which is less than 4%, by weight of the sum of the amounts of the substituted alkoxyaniline and the phenylenediamine.

The substituted alkoxyanilines are especially effective in compositions in which the rubber is unsaturated such as cis-polyisoprene, either natural or synthetic and other rubbers, including for example poly-1,3-butadiene, copolymers of 1,3- butadiene with other monomers, for example styrene, acrylonitrile, isobutylene and methyl methacrylate, ethylene-propylene-diene terpolymers (EPDM), functionalised EPDM such as maleic acid- grafted EPDM, and halogen-containing rubbers such as chlorobutyl, bromobutyl and chloroprene rubbers. In other instances, the rubber polymer in a rubber composition of the invention can be a blend of two or more of the rubbers exemplified above, for example a blend of natural rubber and styrene-butadiene rubber. Particularly preferred are blends of rubber for use in the sidewalls of tires.

The alkoxyanilines, as described in more detail hereinbefore, are effective in improving and upgrading a broad spectrum of physical properties of the rubber vulcanisate. They are particularly useful in fully compounded rubber stocks containing a reinforcing agent and/or a filler, a vulcanising agent, and, a conventional process aid, such as a processing oil or mixtures of the like aids, and accelerators. Conventionally used fillers include carbon black, china clay, titanium oxide, talc, silica and others as may be required to achieve specific qualities, properties and benefits of the rubber vulcanisate which typically are used in amounts of from 30 to 100 parts by weight per 100 parts by weight of rubber. Other additives include, for example, zinc oxide, which may be used in an amount of, for instance, from 2 to 10 parts by weight per 100 parts by weight of rubber; stearic acid at a level of, for instance, from 0.5 to 2 parts by weight per 100 parts by weight of rubber and anti-oxidants. The rubber stocks may also contain metal oxide activators other than zinc oxide, for example magnesium oxide, pre- vulcanisation inhibitors, for instance N-cyclohexyl-thio- phthalimide, and post-vulcanisation stabilisers and rubber-metal bonding promoters, for example the thiosulphate derivatives described in EP-B-0 070 143 and EP-B-109 955.

The para alkoxyanilines can be incorporated into the rubber, together with additives, except the vulcanising agent and the vulcanisation accelerator, during a first stage mixing, using, for example, an internal mixer or a mill. In an alternative procedure, the anilines can be incorporated along with the vulcanising agent and accelerator during a second stage mixing. If sulphur is used as the vulcanising agent, the amount is typically in the range from 0.3 to 9 parts by weight per 100 parts by weight of rubber.

Accelerators which can be used include the benzothiazole-2-sulphenamides, for instance N-isopropyl-benzothiazole-2-sulphenamide, N-tert-butyl-benzothiazole-2-sulphenamide, N-cyclohexyl-benzo-thiazole-2-sulphenamide, N,N-dicyclohexylbenzothiazole-2-sulphenamide 2-(morpholinothio)benzothiazole, N,N-di(benzthiazolylthio)-t-butylamine and dithiocarbamates In the compositions of the invention, these are typically used in amounts of from 0.3 to 6 parts by weight per 100 parts by weight of rubber depending on the nature of the rubber, the amount of sulphur, and the properties required in the cured rubber. Other curing systems using sulphur donors, for example dimorpholine disulphide, can be used.

As indicated above, the alkoxyanilines herein can be incorporated into the rubber by conventional mixing procedures. In the processing of natural rubber it is customary to subject the raw rubber to a mastication before the introduction of any additives.

The invention is illustrated by the following specific embodiments.

For the evaluation of the alkoxyanilines of the invention, control stocks of the following composition were employed:

| PARTS BY WEIGHT | | | |
|---|---|---|---|
| | I | II | III |
| Natural Rubber SMR L | 100 | 50 | 100 |
| Carbon black N330 | 50 | - | 50 |
| Zinc oxide | 5 | 5 | 5 |
| Stearic acid | 2 | 1 | 2 |
| Process oil | 3 | - | 3 |
| Santocure® MOR (1) | 0.7 | - | - |
| Sulphur | 2.5 | 2.0 | 2.5 |
| EPDM Terpolymer | - | 25 | - |
| SBR 1502 | - | 25 | - |
| Talc | - | 20 | - |
| China clay | - | 30 | - |
| Titanium dioxide | - | 50 | - |
| Magnesium oxide | - | 0.5 | - |
| Ultramarine Blue | - | 0.2 | - |
| Santocure® NS (2) | - | 1 | 0.6 |
| Santogard® PVI (3) | - | - | 0.05 |

| | | | |
|---|---|---|---|
| (1) N-2-benzothiazolylthiomorpholine | | | |
| (2) N-2-benzothiazolylthio-t-butylamine | | | |
| (3) N-Cyclohexylthiophthalimide | | | |

For masterbatches I and III the natural rubber was pre-masticated before the addition of the other ingredients to a viscosity of about 60 Mooney units ML (1+4) at 100°C (ISO R289).

In preparing masterbatches I and III in a laboratory scale BR Banbury internal mixer, the ingredients, except the sulphur and accelerator, were incorporated in accordance with the following schedule at the intervals shown starting with he premasticated rubber at time zero.

| Time (min.) | Added ingredients |
|---|---|
| 0 | Rubber |
| 1 | Half of N330 and zinc oxide |
| 2.5 | Half of N330 + other ingredients, except sulphur and accelerator |
| 4 | Sweep |
| 5 | Dump (ca. 145°C) |

The alkoxyaniline test compound (2 phr for masterbatch I; 3 phr for masterbatch III) was added, along with the sulphur and accelerator, on a two roll mill at 70°C.

For masterbatch II, the EPDM was pre-blended with the SBR 1502 in an internal mixer, the Mooney viscosity of the blend was measured and natural rubber was separately pre-masticated to the same viscosity. These two gum rubbers were blended, other ingredients were added in an internal mixer, a Banbury size OOC, along with alkoxyaniline test compound at 2 phr, or 3 phr.

Tensile strength and modulus were measured as described in ISO 37; fatigue life in kc to failure at 100% extension as described by R.C. Ayerst, D.G.Lloyd, E.R. Rodger, DKG Meeting, Wiesbaden, May 1971. Contact stain and discolouration were measured as described in ISO 3865 with a reflectance spectrometric method or by means of a visual examination, rated on a scale from zero (no stain or discoloration) to 10 (dark brown/black). Ozone resistance was judged on a scale from 10 (no initial cracks or cut of the rubber surface) , through intermediate stages of cracking, finally to zero rating (breakage of the sample) when the rubber test pieces were flexed on a Ross flexing apparatus described in ASTM D 1502, for the periods of time noted in an atmosphere of air in which the ozone concentration had been augmented to 15 parts per hundred million (pphm) at 25°C.

### EXAMPLE 1

The listed compounds below were incorporated into masterbatch I as described above at a level of 2 phr and samples were vulcanised at 141°C for 25 minutes. Results of testing performed on the rubber vulcanisate are shown in table 1.
1. None (control)
2. N-butyl-N-cyclohexyl-4-ethoxyaniline
3. N-cyclohexyl-N-methyl-4-ethoxyaniline
4. N,N-Di(cyclohexyl)-4-hexyloxyaniline

**TABLE 1**

| | comparative | | | |
|---|---|---|---|---|
| Text mixture number : | 1 | 2 | 3 | 4 |
| Tensile Strength (MPA) | | | | |
| (a) unaged | 28.0 | 28.3 | 28.1 | 27.0 |
| (b) aged 10 days at 85°C in air | 12.4 | 21.6 | 22.1 | 21.3 |
| Residual tensile Strength (%) after ageing | 44 | 76 | 79 | 79 |

| Elongation at Break (%) | | | | |
|---|---|---|---|---|
| (a) unaged | 527 | 547 | 518 | 500 |
| (b) aged 10 days at 85°C in air | 251 | 319 | 303 | 336 |
| Fatigue life (kc) | 54 | 107 | 101 | 100 |

The results of Table 1 show that the N,N-disubstituted alkoxy-anilines protect natural rubber against air oxidation in terms of retained tensile strength and elongation at break and they have a fatigue life substantially better than that of the control (N° 1 in Table).

### EXAMPLE 2

The compounds below were incorporated into Masterbatch II as described above, each at a level of 2 phr, and samples were vulcanised at 180° for six minutes.
1. None (control)
2. Santowhite® Powder (Note 1)
3. Santoflex® 13 (Note 2)
4. N,N-Di(cyclohexyl)-4-hexyloxyaniline
5. N-Butyl-N-cyclohexyl-4-ethoxyaniline
6. N-cyclohexyl-N-methyl-4-ethoxyaniline
(Note 1) Santowhite® Powder is the commercial antidegradant 4,4'-butylidenebis(6-t-butyl-3-methylphenol).
(Note 2) Santoflex® 13 is N-(1,3-dimethylbutyl)-N'-phenyl-p- phenylene diamine.

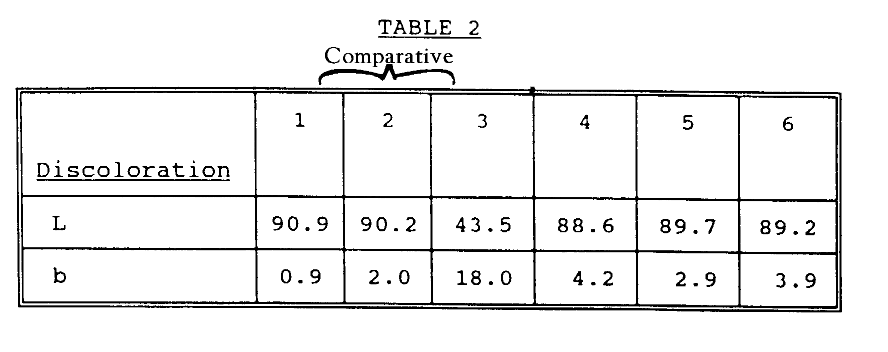

The discoloration of the white rubber stock is described in terms of L and b, in Table 1 which have been measured with the aid of a HUNTER colorimeter; where L (lightness) varies between 100 for perfect white to zero for black and refers to diffused light over all the visible spectrum; b expresses the colour of the diffused light along an axis on which positive values (as here) indicate a trend to yellow, and negative values would indicate a trend to blue. Thus the N-disubstituted alkoxyanilines, Nos 4, 5, and 6, have only a slight tendancy to discolour : in lightness they are very close to the control (N° 1) and there is little yellowing. Thus they behave similarly to the commercial antidegradant (N° 2) which is known not to discolour white rubber stocks to any significant extent. Compared against the other commercial antidegradant (N° 3) the alkoxyanilines of the invention are vastly superior in terms of non-discolouration.

### EXAMPLE 3

The alkoxyanilines or commercial antidegradants of Table 3, each at 3 phr, were incorporated into masterbatches II & III as described above, and samples were vulcanised at 141°C for a time which corresponds to t'_{c}90 in accordance with ISO 3417 (measurement of vulcanisation characteristics with the oscillating disc curemeter).

Thus in masterbatch III the alkoxyanilines in accordance with the invention provide superior fatigue lives to those of the control (no antidegradant) or the commercial antidegradant (Note 1). In addition, the alkoxyanilines provide a degree of ozone resistance.

Importantly, besides the above properties, the alkoxyanilines in masterbatch III either do not stain by the contact procedure described above or only in a minor way : thus they are generally superior in this respect to the phenolic antidegradant (Note 1) and vastly superior to the para-phenylene diamine antidegradant (Note 2).

Similarly, the alkoxyanilines of the invention, at 3 phr, in masterbatch III mostly do not discolor unlike the para-phenylene diamine at the same level.

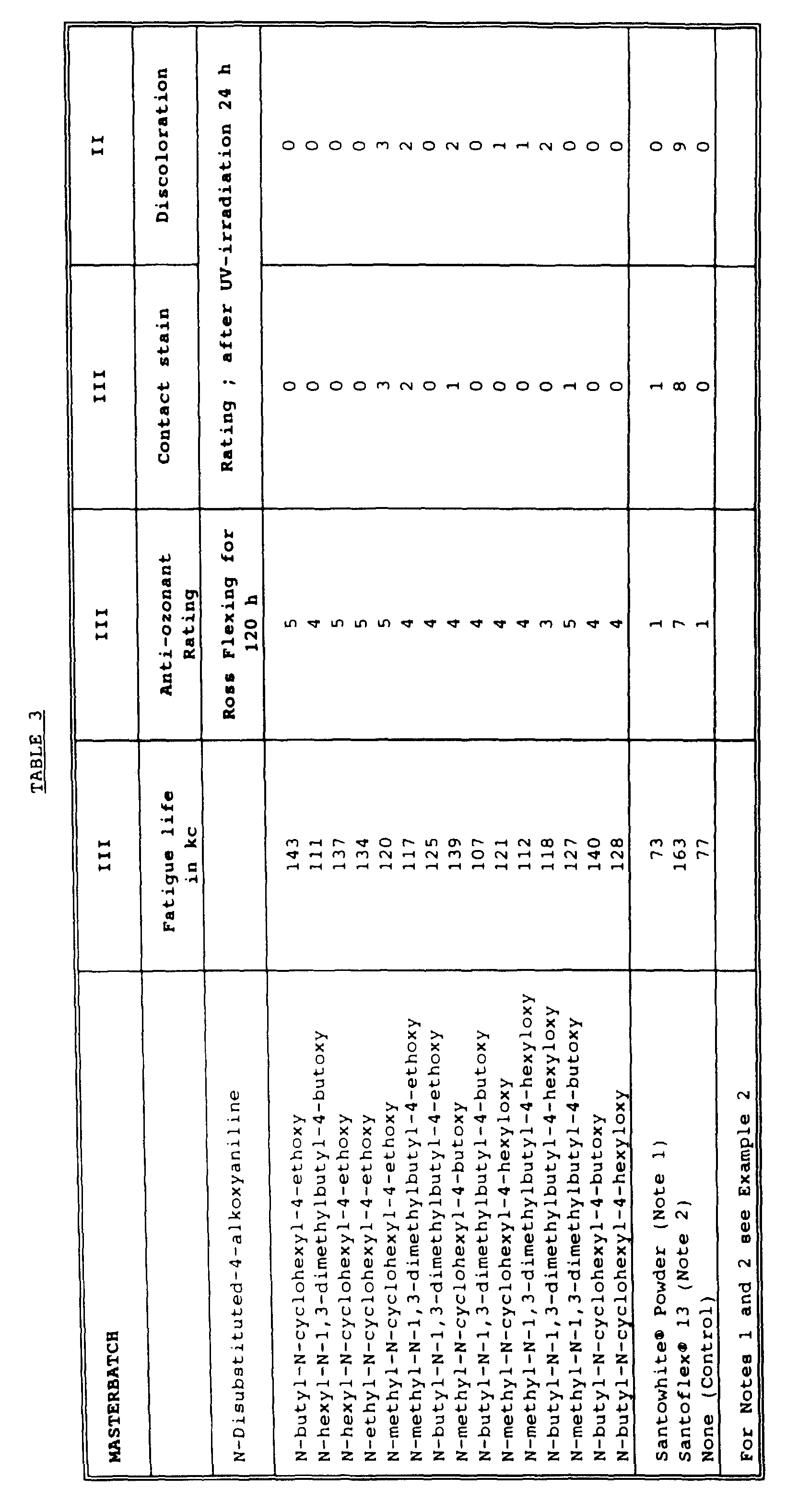

### EXAMPLE 4

An alkoxyaniline, see Table 4, is mixed in different proportions with a commercial antidegradant (combined amount of alkoxyaniline and antidegradant : 3 phr) and this mixture was incorporated into masterbatch III as described above. Samples were vulcanised at 141°C for a time which corresponds to t'_{c}90 in accordance with ISO 3417..

**Table 4**

| | | | | | | | | |
|---|---|---|---|---|---|---|---|---|
| N-butyl-N-cyclohexyl-4-ethoxyaniline | - | 3 | 2.9 | 2.8 | 2.7 | 2 | 1 | 0 |
| PPD (1) | - | 0 | 0.1 | 0.2 | 0.3 | 1 | 2 | 3 |
| Contact stain rating (UV 24h) | 0 | 0 | 1 | 1 | 2 | 4 | 6 | 8 |

| | | | | | | | | |
|---|---|---|---|---|---|---|---|---|
| (1) PPD = SANTOFLEX® 13 -- see Example 2 --. | | | | | | | | |

The data in Table 4 illustrate that N-butyl-N-cyclohexyl-4-ethoxy-aniline does not stain, but when used with more than 10% PPD the staining starts to become significant. The results clearly show that only very low levels, below about 10%, of a PPD antidegradant can be used without affecting, to a substantial extent, the vulcanisate, especially staining properties.

### EXAMPLE 5

A series of alkoxyanilines, see Table 5, were incorporated at 3 phr. into masterbatch III as described above, but without, N-cyclohexylthiophthalimide. Samples were vulcanized at 141°C for a time which corresponds to t'_{c}90 in accordance with ISO 3417.

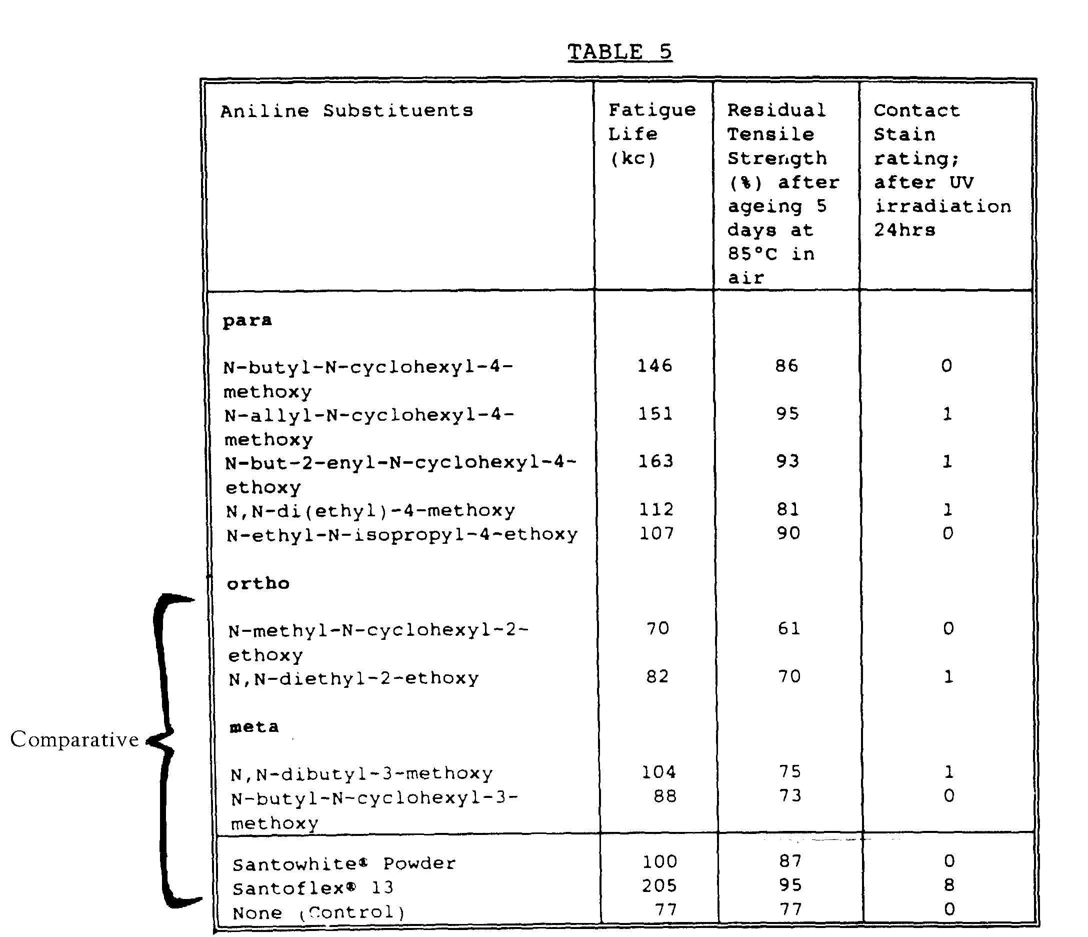

The experimental results show that the use of the para alkoxyanilines in accordance with the invention herein provide, in addition to excellent contact stain properties, acceptable to outstanding fatigue life and very good to outstanding anti-oxidant properties (Residual Tensile Strength).

## Claims

1. A rubber composition containing a rubber and additives inclusive of performance and curing agents, characterised in that the composition comprises from 0.1 to 10 phr of a para substituted alkoxyaniline having the general formula 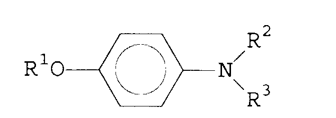 wherein R¹O is an alkoxy substituent in the benzene nucleus, R¹, R² or R³ is independently selected from straight or branched alkyl groups having from 1 to 20 carbon atoms, the chain of carbon atoms being possibly interrupted by ether or sulphide linkages, cycloalkyl and cycloalkenyl having from 4 to 8 carbon atoms, said cyclic structure optionally containing an oxygen atom in between two carbon atoms, alkenyls and alkynyls having from 2 to 20 carbon atoms in the chain structure, aralkyls containing 7 or more carbon atoms, or combinations thereof, with the proviso that the composition contains less than 4% of phenylenediamine anti-ozonants.

2. The composition in accordance with claim 1 wherein R¹ is an alkylgroup having from 1 to 6 carbon atoms or a benzyl group.

3. The composition in accordance with claim 1 wherein the para alkoxyaniline is used in an amount of from 0.2 to 5 phr.

4. The composition in accordance with claim 1 wherein R² or R³ is independently selected from an alkylgroup having from 1 to 6 carbon atoms, cyclohexyl and benzyl.

5. The composition in accordance with claims 2 and 4 wherein the para alkoxyaniline is used in an amount of from 0.4 to 4 phr.

6. A rubber composition containing a rubber and additives inclusive of performance and curing agents, characterised in that the composition comprises from 0.1 to 10 phr of a para substituted alkoxyaniline selected from N-butyl-N-cyclohexyl-4-ethoxyaniline, N-ethyl-N-cyclohexyl-4-ethoxyaniline, N-butyl-N-1,3-dimethylbutyl-4-ethoxyaniline and N-butyl-N-1,3-dimethylbutyl-4-butoxyanilite with the proviso that when N,N'- substituted-p-phenylenediamine is present the level of such diamine represents less than 10% by weight of the sum of the amounts of the substituted alkoxyaniline and the phenylenediamine.

7. The composition in accordance with claim 6 wherein the para alkoxyaniline is selected from N-butyl-N-cyclohexyl-4-methoxyaniline, N-allyl-N-cyclohexyl-4-methoxyaniline and N-but-2-enyl-N-cyclochexyl-4-ethoxyaniline.

## Patentansprüche

1. Kautschukzusammensetzung, die einen Kautschuk sowie Additive einschliesslich von Leistungsverbesserungs- und Vernetzungsmitteln enthält, dadurch gekennzeichnet, dass die Zusammensetzung 0,1 bis 10 Teile, bezogen auf 100 Teile Kautschuk, p-substituiertes Alkoxyanilin der allgemeinen Formel 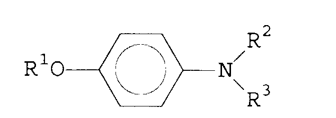 enthält, wobei R¹O ein Alkoxysubstituent am Benzolring ist,
R¹, R² oder R³ unabhängig gewählt sind aus gerade oder verzweigten Alkylgruppen mit 1 bis 20 Kohlenstoffatomen, wobei die Kette der Kohlenstoffatome gegebenenfalls durch Ether- oder Sulfidbrücken unterbrochen sind, Cycloalkylund Cycloalkenyl mit 4 bis 8 Kohlenstoffatomen, wobei die cyklische Struktur gegebenenfalls zwischen zwei Kohlenstoffatomen ein Sauerstoffatom enthält, Alkenyle und Alkinyle mit 2 bis 20 Kohlenstoffatomen in der Kettenstruktur, Aralkyle enthaltend 7 oder mehr Kohlenstoffatome oder Kombinationen hiervon mit der Massgabe, dass die Zusammensetzung weniger als 4% Phenylendiamin-Antiozonierungsmittel enthält.

2. Zusammensetzung nach Anspruch 1, bei der R¹ eine Alkylgruppe mit 1 bis 6 Kohlenstoffatomen oder eine Benzylgruppe ist.

3. Zusammensetzung nach Anspruch 1, bei der das p-Alkoxyanilin in einem Anteil von 0,2 bis 5 Teilen pro 100 Teile Kautschuk verwendet wird.

4. Zusammensetzung nach Anspruch 1, bei der R² oder R³ unabhängig gewählt sind aus einer Alkylgruppe mit 1 bis 6 Kohlenstoffatomen, Cyclohexyl und Benzyl.

5. Zusammensetzung nach den Ansprüchen 2 und 4, bei der das p-Alkoxyanilin in einem Anteil von 0,4 bis 4 Teilen pro 100 Teile Kautschuk verwendet wird.

6. Kautschukzusammensetzung, die einen Kautschuk sowie Additive einschliesslich von Leistungsverbesserungs- und Vernetzungsmitteln enthält, dadurch gekennzeichnet, dass die Zusammensetzung 0,1 bis 10 Teile, bezogen auf 100 Teile Kautschuk, eines p-substituierten Alkoxyanilins gewählt aus N-Butyl-N-cyclohexyl-4-ethoxyanilin, N-Ethyl-N-cyclohexyl-4-ethoxyanilin, N-Butyl-N-1,3-dimethylbutyl-4-ethoxyanilin und N-Butyl-N-1,3-dimethylbutyl-4-butoxy-anilin, mit der Massgabe, dass dann, wenn N,N'-substituiertes p-Phenylendiamin vorhanden ist, der Gehalt eines solchen Diamins weniger als 10 Gew.% der Summe der Anteile an substituiertem Alkoxyanilin und dem Phenylendiamin ausmacht.

7. Zusammensetzung nach Anspruch 6, in der das p-Alkoxyanilin gewählt ist aus N-Butyl-N-cyclohexyl-4-methoxyanilin, N-Allyl-N-cyclohexyl-4-methoxyanilin und N-But-2-enyl-N-cyclohexyl-4-ethoxyanilin.

## Revendications

1. Composition de caoutchouc contenant un caoutchouc et des additifs, dont des agents de performance et de vulcanisation, caractérisée en ce que la composition comprend de 0,1 à 10 ppc d'une alcoxyaniline para-substituée de formule générale: 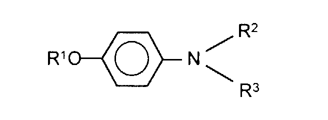 dans laquelle R¹O est un substituant alcoxy sur le noyau benzénique, R¹, R² ou R³ est choisi, indépendamment, parmi des groupes alkyles à chaîne droite ou ramifiée ayant de 1 à 20 atomes de carbone, la chaîne d'atomes de carbone pouvant éventuellement être interrompue par des liaisons éther ou sulfure, des groupes cycloalkyles et cycloalcényles ayant de 4 à 8 atomes de carbone, ladite structure cyclique contenant, éventuellement, un atome d'oxygène intercalé entre deux atomes de carbone, des groupes alcényles et alcynyles ayant de 2 à 20 atomes de carbone dans la structure de la chaîne, des groupes aralkyles contenant 7 atomes de carbone ou plus, ou des combinaisons de ceux-ci, à condition que la composition contienne moins de 4 % d'agents anti-ozone à base de phénylène diamine.

2. La composition selon la revendication 1, dans laquelle R' est un groupe alkyle ayant de 1 à 6 atomes de carbone ou un groupe benzyle.

3. La composition selon la revendication 1, dans laquelle la para-alcoxyaniline est utilisée en une quantité de 0,2 à 5 ppc.

4. La composition selon la revendication 1, dans laquelle R² ou R³ est choisi, indépendamment, parmi un groupe alkyle ayant de 1 à 6 atomes de carbone, un groupe cyclohexyle et benzyle.

5. La composition selon les revendications 2 et 4, dans laquelle la para-alcoxyaniline est utilisée en une quantité de 0,4 à 4 ppc.

6. Une composition à base de caoutchouc contenant un caoutchouc et des additifs, dont des agents de fabrication et de vulcanisation, caractérisée en ce que la composition comprend de 0,1 à 10 ppc d'une alcoxyaniline para-substituée choisie parmi la N-butyl-N-cyclohexyl-4-éthoxy-aniline, la N-éthyl-N-cyclohexyl-4-éthoxy-aniline, la N-butyl-N-1,3-diméthylbutyl-4-éthoxy-aniline et la N-butyl-N-1,3-diméthylbutyl-4-butoxy-aniline, à condition que lorsqu'une N,N'-p-phénylène diamine substituée est présente, la teneur en cette diamine représente moins de 10 % en poids de la somme des quantités de l'alcoxyaniline substituée et de la phénylène diamine.

7. La composition selon la revendication 6, dans laquelle la para-alcoxyaniline est choisie parmi la N-butyl-N-cyclohexyl-4-méthoxy-aniline, la N-allyl-N-cyclohexyl-4-méthoxy-aniline, et la N-but-2-ényl-N-cyclohexyl-4-éthoxy-aniline.
